# EUROPÄISCHE PATENTSCHRIFT

(11) **EP 4 124 991 B1**
(45) Veröffentlichungstag und Bekanntmachung des Hinweises auf die Patenterteilung: **15.11.2023**
(21) Anmeldenummer: 21188808.6
(22) Anmeldetag: 30.07.2021
(51) Int. Cl.: G06K 7/10

(54) **VERFAHREN ZUM AUTOMATISCHEN EINRICHTEN EINER CODELESEVORRICHTUNG UND KAMERABASIERTE CODELESEVORRICHTUNG**
METHOD FOR AUTOMATICALLY SETTING UP A CODE READING DEVICE AND CAMERA-BASED CODE READING DEVICE
PROCÉDÉ D'ALIGNEMENT AUTOMATIQUE D'UN DISPOSITIF LECTEUR DE CODE ET DISPOSITIF LECTEUR DE CODE À BASE DE CAMÉRA

(43) Veröffentlichungstag der Anmeldung: 01.02.2023
(73) Patentinhaber: SICK AG, 79183 Waldkirch (DE)
(72) Erfinder: Schüler, Pascal, 79331 Teningen (DE)

(56) Entgegenhaltungen:
- EP-A1- 2 843 616
- US-A1- 2013 048 722
- US-B1- 6 546 114

## Beschreibung

Die Erfindung betrifft ein Verfahren zum automatischen Einrichten einer Codelesevorrichtung und eine kamerabasierte Codelesevorrichtung nach dem Oberbegriff von Anspruch 1 beziehungsweise 14.

Codeleser sind von Supermarktkassen, zur automatischen Paketidentifikation, Sortierung von Postsendungen, von der Gepäckabfertigung in Flughäfen und aus anderen Logistikanwendungen bekannt. Ein kamerabasierter Codeleser nimmt mittels eines Bildsensors Bilder der Objekte mit den darauf befindlichen Codes auf, und eine Bildauswertungssoftware extrahiert aus diesen Bildern die Codeinformation. Kamerabasierte Codeleser kommen problemlos auch mit anderen Codearten als eindimensionalen Strichcodes zurecht, die wie ein Matrixcode auch zweidimensional aufgebaut sind und mehr Informationen zur Verfügung stellen.

In einer wichtigen Anwendungsgruppe werden die einen Code tragenden Objekte an dem Codeleser vorbei gefördert. Mit dem Bildsensor werden wiederholt Bilddaten aufgenommen, die sich je nach Aufnahmefrequenz und Fördergeschwindigkeit mehr oder weniger überlappen. Ein Codeleser ist vielfach Teil eines komplexeren Codelesesystems. So sind oft mehrere Codeleser an einem Lesetunnel vorgesehen, um Objekte von mehreren oder allen Seiten aufzunehmen. Weiterhin wird häufig die Geometrie der geförderten Objekte vorab mit einem gesonderten Laserscanner vermessen.

Eine der wichtigsten Kenngrößen eines Codelesesystems ist die Leserate, da nicht gelesene Codes zu manuellen Nachbearbeitungsschritten oder sogar Zuordnungsfehlern führen. Dafür ist es wichtig, das Codelesesystem für seine Anwendung zu optimieren, also eine passende Belichtung, Kameraeinstellung sowie Auswahl und Konfiguration von Decoderalgorithmen einschließlich geeigneter Vorverarbeitungen der aufgenommenen Bilder zu finden. Das ist durch manuelle Schritte beim Einrichten eines Codelesesystems möglich, aber ausgesprochen aufwändig und nur durch einen Experten zu leisten.

Das Teilproblem der Fokussierung auf Objekte unterschiedlicher Höhe wird häufig mit einem Autofokussystem gelöst, das sich dynamisch an jedes einzelne Objekt anpasst. Zugleich können weitere Kamera- und Belichtungseinstellungen für die gemessene Objekthöhe eingestellt werden. Die EP 3 812 953 A1 geht sogar noch einen Schritt weiter und passt ihren Decoder dynamisch an die jeweilige Objekthöhe an. Das ist aber kein Ausweg, wenn kein Distanzwert vorliegt oder der Codeleser nur ein Fix-Fokus-System anbietet, beziehungsweise ein sogenanntes Slow-Fokus-System, das zwar eine Verstellung der Fokuslage ermöglicht, aber für die dynamische Anpassung an einzelne Objekte viel zu langsam ist.

Es ist ferner bekannt, bei der Inbetriebnahme in einem Autosetup einen guten Parametersatz zu ermitteln. Dafür wird vom Einrichter ein repräsentatives Objekt mit Code ausgewählt und im Stillstand von dem Codelesesystem erfasst. Der auf diese Weise ermittelte Arbeitspunkt ist dann aber nur für die zugrundeliegende Stillstandsituation optimiert. In der eigentlichen Anwendung sollen jedoch Codes in Bewegung gelesen werden, die auf Objekten unterschiedlicher Höhen angebracht sind. Dabei ist oft auch die Anzahl der Objekte und die Anzahl der Etiketten beziehungsweise Codes im jeweiligen aktuell aufgenommenen Bild unbekannt. Auf diese Abweichungen von der eingelernten Stillstandsituation mit dem repräsentativen Objekt ist das Codelesesystem nicht vorbereitet, und deshalb bleibt die Leistungsfähigkeit im Betrieb unter den Möglichkeiten.

Teilweise wird deshalb der Weg beschritten, mehrere Konfigurationen für unterschiedliche im Stillstand aufgenommene Objekte zu ermitteln und in verschiedenen Parameterbänken zu speichern. Das löst das Problem noch nicht, da nicht bekannt ist, welche Konfiguration für das konkret als nächstes erfasste Objekt geeignet ist. Die verschiedenen Konfigurationen können durchiteriert werden, aber das verlangsamt den Decodiervorgang und verwendet letztlich doch wieder wertvolle Ressourcen für Leseversuche, die zum Scheitern verurteilt sind. Ein derart explorativer Ansatz wäre schon von Grund auf denkbar, indem Bilddaten versuchsweise mit verschiedensten Parametereinstellungen und Algorithmen aufgenommen und bearbeitet werden. Das ist in der Praxis in dem großen Parameterraum nicht zu leisten. Eine Konzentration in wenigstens potentiell leistungsfähige Konfigurationen für verschiedene eingelernte Objekte ist ein erster Verbesserungsschritt, mehr aber nicht.

Es ist weiterhin vorstellbar, den bei der Inbetriebnahme gewonnenen Parametersatz während des eigentlichen Betriebs in kleinen Schritten weiter anzupassen. Die EP 1 014 292 B1 beispielsweise offenbart ein Verfahren zur automatischen Regelung von Charakteristika eines optischen Codelesesystems, das seinen Arbeitspunkt immer wieder feinjustiert. Dabei ist nur schwer vorherzusagen, wie sich das konkret auf die Leserate auswirkt. Vornehmlich werden auf diese Weise schleichende Veränderungen und Driften kompensiert. In einer typischen Lesesituation an einem Förderband beispielsweise ändern sich jedoch die Bedingungen hochdynamisch allein schon durch die verschiedenen Objekthöhen. Dafür sind nachträgliche, eher langsame und geringfügige Parameteranpassungen viel zu träge. Dramatischere Parameteranpassungen wiederum drohen die anfängliche Optimierung aufgrund von nicht repräsentativen Einzelereignissen völlig zu verlieren.

Somit besteht die Schwierigkeit, ein Codelesesystem für einen dynamischen Betrieb zu optimieren, und zwar auch dann, wenn es an Messwerten, wie einem Distanzwert zum jeweiligen Objekt, sowie an rechtzeitig nachjustierbaren optischen Einstellungen fehlt, wie einer dynamischen Fokusverstellung. Eine für eine längere Betriebsphase gültige manuelle Optimierung ist aufgrund sich immer weiterentwickelnder Decodierverfahren und der vielen Parameter Kamera und Decoder eine ausgesprochen komplexe und fehlerträchtige Angelegenheit. In der Praxis führt das zu schlechteren Leseraten.

Es ist daher Aufgabe der Erfindung, die Parametrierung einer Codelesevorrichtung zu verbessern.

Diese Aufgabe wird durch ein Verfahren zum automatischen Einrichten einer Codelesevorrichtung und eine kamerabasierte Codelesevorrichtung nach Anspruch 1 beziehungsweise 14 gelöst. Die beispielsweise während der Inbetriebnahme einzurichtende Codelesevorrichtung weist einen Bildsensor sowie eine Steuer- und Auswertungseinheit auf. Der Bildsensor beziehungsweise eine Kamera mit dem Bildsensor nimmt im späteren Betrieb Bilder von Objekten mit optischen Codes auf, und die Steuer- und Auswertungseinheit lokalisiert darin Codebereiche und decodiert die gefundenen Codes, d.h. liest deren jeweiligen Codeinhalt. Ein zu lesender optischer Code kann ein Barcode, aber auch ein zweidimensionaler Code nach einem der diversen bekannten Standards sein.

Zum Einrichten wird ein Beispielbild eines Beispielobjekts aufgenommen. Das Beispielobjekt sollte repräsentativ oder typisch für die spätere Anwendung ausgewählt sein und dementsprechend mindestens einen Beispielcode der Art tragen, die später im Betrieb gelesen werden sollen. Die Auswahl eines geeigneten Beispielobjekts obliegt dem Einrichter. Das Verfahren funktioniert bei einem weniger repräsentativen Objekt genauso, findet aber möglicherweise eine etwas weniger geeignete Konfiguration. Es ist denkbar, dass mehrere Bildsensoren zusammenwirken, um ein größeres Bild oder Beispielbild zusammenzusetzen, das ist im Folgenden vorzugsweise mit umfasst und wird wie eine einzige Kamera beziehungsweise ein einziger Bildsensor mit großem Sichtfeld behandelt.

Durch das automatische Einrichten wird anhand einer Auswertung des Beispielbildes für den späteren Betrieb mindestens ein Aufnahmeparameter und/oder mindestens ein Decodierparameter eines Decodierverfahrens gesetzt, mit dem die Codelesevorrichtung dann im Betrieb Codeinhalte liest. Ein entsprechender Parametersatz beziehungsweise eine Kombination von Parametern wird auch als Arbeitspunkt bezeichnet.

Die Erfindung geht von dem Grundgedanken aus, das aufgenommene Beispielbild durch rechnerische Variation zu verfremden und dadurch zu vervielfältigen. Rechnerisch bedeutet, dass dasselbe physische Ausgangsbild durch unterschiedliche Bearbeitung variiert wird. Es handelt sich gleichsam um virtuelle Beispielbilder, die nur mittelbar aus einer Aufnahme der realen Welt entstehen. Das schließt den Fall mehrerer physischer Ausgangsbilder nicht aus, die dann in unterschiedlicher oder gleicher Weite bearbeitet und damit vervielfältigt werden. Auf diese Weise entsteht ein vergrößerter Bilddatensatz mit weiteren Beispielbilder. Die Auswertung, nach der mindestens ein Aufnahmeparameter und/oder mindestens ein Decodierparameter eines Decodierverfahrens gesetzt wird, bezieht nun die weiteren Beispielbilder ein. Damit wird eine breitere Basis geschaffen, mit der die künftige Betriebssituation besser abgedeckt wird als durch das physisch aufgenommene Beispielbild allein.

Das Verfahren ist computerimplementiert, es läuft automatisch oder selbsttätig ab. Gewisse manuelle Eingriffe, wie eine Bestätigung, dass sich das Beispielobjekt im Sichtfeld befindet, können in den automatischen Ablauf integriert werden. Die eigentliche Optimierung kommt ohne manuelle Schritte aus, wobei dem Einrichter unbenommen bleibt, abschließend noch manuell nachzustellen. Das Einrichtverfahren kann in der Steuer- und Auswertungseinheit der Codelesevorrichtung und/oder mindestens teilweise in einer dauerhaft oder vorübergehend angeschlossenen Recheneinheit ablaufen, wie einer übergeordneten Steuerung, einem Konfigurationscomputer oder einem Netzwerk einschließlich einer Cloud.

Die Erfindung hat den Vorteil, dass durch Erzeugung weiterer Beispielbilder und Auswertung des entsprechend vergrößerten Bilddatensatzes beim Einrichten ein besonders geeigneter Arbeitspunkt gefunden wird. Dieser Arbeitspunkt berücksichtigt den späteren dynamischen Betrieb, wie bewegte Objekte und unterschiedliche Objekthöhen, auch für Variationen, die das Beispielobjekt und dessen Beispielbild selbst gar nicht erkennen lassen. Das ermöglicht eine besonders hohe Leserate. Dabei kann auch das Zeitverhalten des Decoders eine Rolle spielen, dem im Betrieb bei der Aufnahme und Auswertung von Bildsequenzen nur eine begrenzte Rechenzeit bis zum nächsten Bild zur Verfügung steht. Die verfügbare Decoderzeit wird durch einen optimierten Arbeitspunkt ausgereizt, beziehungsweise es kann eine höhere Bildaufnahmefrequenz eingestellt werden. Durch den automatisierten Ablauf ist die komplexe Optimierungsaufgabe schnell und kostengünstig durchführbar. Vertieftes Expertenwissen wie bei manueller Optimierung ist nicht erforderlich, und die Automatisierung trägt zur Fehlervermeidung bei. Eine nachträgliche Feineinstellung ist möglich. Auf Veränderungen, wie ein Decoder-Update, kann durch erneutes Durchlaufen des dann möglicherweise verkürzten Verfahrens sehr einfach reagiert werden.

Die Auswertung eines Beispielbildes weist bevorzugt einen Decodierversuch auf. Decodierversuch bedeutet, dass mindestens ein Decoder oder Decodierverfahren auf das Beispielbild angewandt wird, um den Codeinhalt eines Codes in dem Beispielbild zu lesen. Solche Leseversuche werden je nach Schritt innerhalb des Einrichtens mit einem physisch aufgenommenen Beispielbild oder einem virtuell erzeugten weiteren Beispielbild unternommen. Der Erfolg des Decodierversuch wird bewertet, im einfachsten Fall binär, ob der Code gelesen werden konnte (GoodRead) oder nicht (NoRead). Vorzugsweise wird zudem ein Qualitätsmaß des Decoders bestimmt, aus dem sich einschätzen lässt, bei welchen zusätzlichen Qualitätseinbußen das Lesen immer noch möglich gewesen wäre. Ein jeweiliger Arbeitspunkt wird somit am echten Decoder testbar oder verifizierbar, der im späteren Betrieb eingesetzt wird. Das ist letztlich die relevanteste Bewertungsinstanz. Auf diese Weise kann auf Veränderungen der Decoderversion beispielsweise nach einem Softwareupdate sehr einfach mit dem gleichen Einrichtverfahren reagiert werden. Der Fortschritt durch kontinuierliche Verbesserungen der Algorithmen für die Decodierung wird damit durch einen jeweils optimalen Arbeitspunkt unterstützt.

Der mindestens eine Aufnahmeparameter weist bevorzugt eine Lichtempfindlichkeit (Gain), eine Belichtungszeit (Shutter), eine Bildwiederholfrequenz und/oder eine Fokuslage einer dem Bildsensors vorgeordneten Optik auf. Das sind wichtige Aufnahmeparameter, insbesondere werden dadurch hinreichend scharfe Bilder durch eine geeignete Fokuslage mit Einfluss auf weitere Bildparameter wie den Kontrast sowie durch Lichtempfindlichkeit und Belichtungszeit ausreichend helle, zugleich nicht übersteuerte Bilder mit möglichst wenig Bewegungsartefakten aufgenommen. Die Decodierparameter betreffen beispielsweise die Art der zu lesenden Codes, die Wahl der Decoderalgorithmen, eine Modulgröße oder mögliche Vorverarbeitungen wie Rauschfilter oder Superresolution zur Auflösungsverbesserung. Die dem Decoder zwischen zwei Aufnahmen zur Verfügung stehende Decoderzeit sollte optimal genutzt werden. Je schneller der Decoder ist, desto höher kann die Aufnahmefrequenz gewählt werden, so dass mehr Chancen entstehen, einen jeweiligen Code in für dessen Lesen geeigneter Weise aufzunehmen.

Vorzugsweise werden weitere Beispielbilder für unterschiedliche Objektgrößen erzeugt, insbesondere je ein weiteres Beispielbild für eine im nachfolgenden Betrieb erwartete minimale Objekthöhe und maximale Objekthöhe. Die Objektgröße korrespondiert mit dem Abstand zwischen Bildsensor und aufgenommener Objektfläche, die dem Bildsensor umso näher kommt, je größer das Objekt ist und umgekehrt. Dabei wird die Vorstellung meist von einer Montage einer Kamera von oben geleitet, die maßgebliche Dimension der Objektgröße ist dann die Objekthöhe. Bei Montage aus anderer Perspektive ist die Objekthöhe entsprechend zu verstehen. Weitere Beispielbilder für unterschiedliche Objektgrößen sind ein besonders bevorzugtes und relevantes Beispiel für eine Veränderung zur rechnerischen Erweiterung des Bilddatensatzes für die Festlegung eines Arbeitspunktes, denn die unterschiedlichen Objektgrößen oder -höhen wirken sich unter anderem auf die Fokuslage oder die Abweichung von derselben sowie die Belichtung und damit zentrale Qualitätskriterien der Bilder aus. Der Arbeitspunkt wird nicht nur für die eine Objektgröße oder -höhe des Beispielobjekts optimiert, sondern für alle zu erwartenden Objektgrößen oder -höhen. Insbesondere werden weitere Beispielbilder für die Extreme einer minimalen und maximalen erwarteten Objekthöhe erzeugt, nochmals bevorzugt je genau eines. Insgesamt entstehen dann drei Beispielbilder, zwei davon virtuell für einen maximalen Abstand eines niedrigen aufgenommenen Objekts beispielsweise auf einer Förderebene und einen minimalen Abstand für ein hohes aufgenommenes Objekt sowie das physisch aufgenommene Beispielbild für ein Objekt einer Zwischengröße oder -höhe. Die Annahme ist, dass wenn der Decoder mit den Extremfällen umgehen kann, dies für Zwischenzustände erst recht der Fall ist. Dennoch ist die Erzeugung von mehr als zwei weiteren Beispielbildern zu anderen Objektgrößen oder -höhen oder zur Variation anderer Einflüsse als der Objektgröße oder -höhe zusätzlich denkbar.

Die weiteren Beispielbilder werden bevorzugt durch Auflösungserhöhung oder Auflösungsverringerung erzeugt, auch als Upsampling beziehungsweise Downsampling bezeichnet. Das entspricht dann einer virtuellen Aufnahme aus größerem oder kleinerem Abstand entsprechend einer angenommenen Objektgröße oder -höhe. Ein besonders geeignetes Verfahren ist eine bikubische Interpolation. Vorab wird vorzugsweise das Beispielbild auf den Beispielcode zentriert und nach einem Upsampling beschnitten (Cropping) beziehungsweise nach einem Downsampling an den Rändern mit Vorgabeinhalten ohne Codestruktur ergänzt. So haben die weiteren Beispielbilder ein einheitliches Format, und der relevante Bildinhalt bleibt erhalten.

Die weiteren Beispielbilder werden vorzugsweise mit einer Unschärfe entsprechend einer erwarteten Fehlfokussierung erzeugt. Zu der Fokuslage, unter das das physische Beispielbild aufgenommen wurde, gehört ein nur begrenzter Tiefenschärfenbereich. Eine spätere physische Aufnahme eines besonders kleinen oder großen beziehungsweise niedrigen oder hohen Objekts liegt am Rand oder jenseits dieses Tiefenschärfenbereichs. Diese Defokussierung wird vorzugsweise berücksichtigt. Dazu kann der Effekt des Objektivs rechnerisch simuliert werden, beispielsweise durch Faltung des weiteren Beispielbildes mit der Punktspreizfunktion (PSF, Point Spread Function). Als bevorzugte Näherung eignet sich eine Faltung mit einem Gausskern mit einer Standardabweichung, die aus der Defokussierung abgeleitet ist. Die Punkspreizfunktion oder ein sonstiger Filterkern, insbesondere Gausskern, können für verschiedene Fokuslagen und Abweichungen davon vorausberechnet und abgespeichert werden.

Ein Ergebnis der Auswertung rechnerisch erzeugter weiterer Beispielbilder für unterschiedliche Objektgrößen kann sein, dass die gesamte gewünschte Spanne an Objektgrößen mit nur einem Arbeitspunkt nicht abgedeckt werden kann. Der Einrichter erhält damit eine schnelle Rückmeldung, ob die gewünschte Objekthöhenvarianz verarbeitbar ist, und gegebenenfalls einen Hinweis auf eine noch darstellbare Objekthöhenvarianz oder eine mögliche Auf- beziehungsweise Umrüstung der Codelesevorrichtung, um die ursprünglichen Vorgaben doch zu ermöglichen.

Weitere Beispielbilder werden bevorzugt durch Verschieben von Bildinhalten erzeugt. Dies simuliert die spätere Bewegung im Betrieb. Bilder werden in verschiedenen Relativpositionen zwischen Bildsensor beziehungsweise Kamera und Objekt aufgenommen. Vorzugsweise werden weitere Beispielbilder für einen voll getroffenen Code und einen Code in Randlage erzeugt. Letzteres benötigt in der Regel mehr Decoderzeit, bis ein nur teilweise erfasster Code dennoch gelesen werden konnte. Somit lässt sich eine erforderliche Decoderzeit und daraus eine realisierbare Framerate oder Bildwiederholfrequenz bestimmen. Es ist denkbar, das Verschieben von Bildinhalten mit unterschiedlichen angenommenen Objektgrößen oder -höhen zu kombinieren.

Die weiteren Beispielbilder werden bevorzugt mit einer erwarteten Bewegungsunschärfe erzeugt. Die Bewegung im Betrieb erzeugt nicht nur unterschiedliche Objekt- und Codepositionen im Bild, sondern auch Bewegungsunschärfe (motion blur), die ein Lesen der Codes erschwert oder verhindert. Die Bewegungsunschärfe kann ähnlich erzeugt werden wie eine bereits erläuterte Unschärfe für eine defokussierte Aufnahme, insbesondere durch Falten mit einem Gaussfilterkern. Für die Auslegung des Filterkerns, etwa eine Standardabweichung für den Gaussfilterkern, ist nun nicht die Abweichung von einer Fokuslage maßgeblich, sondern es wird beispielsweise eine Standardabweichung gleich der Modulbreite in Pixeln pro Modul (ppm, pixel per module) gewählt.

Vorzugsweise wird zunächst ein Anfangswert für den mindestens einen Aufnahmeparameter und/oder Decodierparameter bestimmt, so dass der Beispielcode gelesen werden kann. Als Grundlage der Optimierung für die spätere dynamische Betriebssituation wird also zunächst einmal sichergestellt, dass der Beispielcode selbst überhaupt gelesen werden kann. Dies wird auch als Erstlesung bezeichnet. Je nach Ausführungsform sind die Anfangswerte im Sinne von gut genug zu verstehen, d.h. der Beispielcode wird überhaupt gelesen (GoodRead), oder es wird mit dem einleitend skizzierten Verfahren bereits eine Optimierung für den statischen Fall durchgeführt. Alternativ zu einer intelligenten Optimierung des statischen Falles wäre auch ein Durchprobieren von Parametern vorstellbar, bis der Beispielcode überhaupt oder sogar optimal gelesen wird. Während des Einrichtens steht für derartige Brute-Force-Ansätze ausreichend Zeit zur Verfügung.

Der mindestens eine Aufnahmeparameter und/oder Decodierparameter wird bevorzugt durch ein Optimierungsverfahren mit Austesten in einem Parameterraum der Aufnahmeparameter und/oder Decodierparameter festgelegt. Vorzugsweise beginnt die Optimierung in Anfangswerten gemäß dem Vorabsatz, da anzunehmen ist, dass von hier aus ein Optimum verlässlicher und schneller aufgefunden wird als bei generischen oder zufälligen Anfangswerten. Ein einfaches Optimierungsverfahren probiert den Parameterraum in vorgegebenen Schritten iterativ um den Anfangswert herum durch und wählt anschließend den Parametersatz mit dem besten Ergebnis oder interpoliert einen solchen Parametersatz zwischen den getesteten Schritten. Alternative Optimierungsverfahren sind auch denkbar, beispielsweise ein Hill Climbing, das sich im Parameterraum in Richtung besserer Leseergebnisse bewegt und dabei insbesondere die Schrittweiten verkürzt. Ein besonders interessanter Teil des Parameterraums betrifft die Fokuslage und die Lichtempfindlichkeit, so dass sich die Optimierung zumindest in einem Teilverfahren unter Festhalten der übrigen Parameter in diesem Teilraum bewegen kann.

Das Beispielbild wird bevorzugt erneut bei einer Einstellung gemäß einem zu testenden mindestens einen Aufnahmeparameter aufgenommen. Innerhalb der Optimierungszyklen wird somit ein neuer Bilddatensatz am momentan getesteten Arbeitspunkt erzeugt, mit zumindest einem realen Beispielbild und zugehörigen weiteren Beispielbildern durch rechnerische Veränderung etwa durch Upsampling/Downsampling und/oder Verschieben von Bildinhalten.

Vorzugsweise werden mehrere Beispielbilder bei einer zu testenden Fokuslage und mehreren Lichtempfindlichkeiten aufgenommen werden. Damit werden die Auswirkungen der Lichtempfindlichkeit nicht rechnerisch vorhergesagt, sondern physisch durch mehrere Aufnahmen gemessen. Damit wird das Remissionsverhalten des Beispielobjekts erfasst. Für ein ideales Referenzobjekt mit bekanntem oder festgelegtem Remissionsverhalten kann der Einfluss einer unterschiedlichen Lichtempfindlichkeit vorab simuliert, berechnet oder eingelernt werden. Dieses Verhalten kann nun mit dem gemessenen Remissionsverhalten reskaliert werden. Das ergibt eine Kombination aus realen Effekten und virtueller Verfremdung, wobei die Vorhersage für die rechnerische Bestimmung weiterer Beispielbilder, insbesondere bei unterschiedlicher angenommener Objektgrößen, erheblich verbessert ist.

Das Einrichten erfolgt bevorzugt mit nur einem einzigen Beispielobjekt. Das vereinfacht und beschleunigt das Einrichten erheblich. Nach dem Stand der Technik würde ein Arbeitspunkt gefunden, der gerade für das einzige Beispielobjekt in dessen Aufnahmesituation optimiert ist. Im Allgemeinen wird das eine Fehloptimierung für die anschließende dynamische Betriebsphase sein. Erfindungsgemäß hingegen wird durch die Erzeugung von weiteren Beispielbildern aus der Präsentation des einzigen Beispielobjekts auf spätere dynamische Situationen verallgemeinert, insbesondere mit unterschiedlichen Objektgrößen oder -höhen und/oder Bewegung. Durch die weiteren Beispielbilder ist das Verhalten des Decoders auch für diese dynamische Situation verifiziert, und es wird ein praxisgerechter optimaler Arbeitspunkt aufgefunden. Das einzige Beispielobjekt kann im Übrigen im Rahmen der Optimierung je nach Ausführungsform durchaus mehrfach an verschiedenen Arbeitspunkten aufgenommen werden. Das ist ein automatischer Ablauf und verkompliziert das Verfahren für den Einrichter nicht, der lediglich anfangs dafür zu sorgen hat, dass das einzige Beispielobjekt im Sichtfeld des Bildsensors angeordnet ist.

Prinzipiell ist denkbar, beim Einrichten statt nur eines einzigen Beispielobjekts nacheinander mehrere Beispielobjekte zu präsentieren. Das Einrichtverfahren wird dadurch aufwändiger, dafür wird deutlicher, welche Objekte im Betrieb zu erwarten sind. Insbesondere können die Optimierungen separiert für jedes Beispielobjekt durchgeführt werden. Die Ergebnisse können miteinander verrechnet werden, insbesondere gemittelt anhand einer erwarteten späteren Objektverteilung. Außerdem können aus dem Optimierungsergebnis für ein Beispielobjekt Anfangswerte für die Optimierung mit einem anderen Beispielobjekt abgeleitet werden.

Das Beispielobjekt wird vorzugsweise im Stillstand aufgenommen, auch wenn im späteren Betrieb ein Strom bewegter Objekte zu erfassen ist. Die Auswirkung der Bewegung kann durch die Erzeugung weiterer Beispielbilder berücksichtigt werden. Eine Beobachtung des Produktivbetriebs mit bewegten Objekten ist nicht erforderlich.

Eine erfindungsgemäße kamerabasierte Codelesevorrichtung weist einen Bildsensorzur Aufnahme von Bilddaten und eine Steuer- und Auswertungseinheit auf, wobei die Codelesevorrichtung gemäß einer Ausführungsform des erfindungsgemäßen Verfahrens eingerichtet und dafür ausgebildet ist, im Betrieb Bilder von Objekten zu erfassen und darauf angebrachte optische Codes zu lesen. Die Codelesevorrichtung kann einen Bildsensor oder mehrere Bildsensoren beziehungsweise eine Kamera oder mehrere Kameras, einen oder mehrere Recheneinheiten sowie weitere Sensoren wie einen Encoder zur Bestimmung einer Vorschubgeschwindigkeit einer Fördereinrichtung oder ein Volumenmesssystem aufweisen. Die Steuer- und Auswertungseinheit kann praktisch beliebig über Kamera und sonstige Recheneinheiten der Codevorrichtung verteilt sein. Insbesondere während des Einrichtens ist denkbar, dass Steuer- und Auswertungsfunktionalität von außen zur Verfügung gestellt wird, sei es durch eine übergeordnete Steuerung, einen angeschlossenen Konfigurationsrechner oder ein Netzwerk beziehungsweise eine Cloud.

Die Codelesevorrichtung ist bevorzugt stationär an einem Strom zu erfassender Objekte montiert, insbesondere an einer Fördereinrichtung. Die zu erfassenden Objekten und die Codelesevorrichtung befinden sich somit in einer Relativbewegung zueinander. Diese Bewegung sowie die unterschiedlichen Objektgrößen oder -höhen sind bevorzugt Teil der Dynamik des Betriebs, die durch den erfindungsgemäß aufgefundenen Arbeitspunkt berücksichtigt wird. Wie schon erwähnt, erfolgt das Einrichten vorzugsweise während einer Präsentation des Beispielobjekts im Stillstand.

Die Codelesevorrichtung weist bevorzugt eine dem Bildsensor zugeordnete Optik auf, deren Fokuslage nur manuell oder langsamer verstellbar ist als eine erwartete Objektabfolge (Fix-Fokus, Slow-Fokus). Es ist mit anderen Worten kein Autofokussystem vorhanden. Sofern überhaupt eine automatische Fokusverstellung möglich ist, wäre diese jedenfalls zu langsam, um sich jeweils rechtzeitig auf das nächste Objekt einzustellen. Die Fokuslage kann nur für eine längere Betriebsphase im Rahmen eines geeigneten Arbeitspunkts angepasst werden. Eine solche Codelesevorrichtung ist einfacher, kostengünstiger und weniger wartungsanfällig, und sie profitiert in besonderem Maße von einem optimierten Arbeitspunkt.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung eines kamerabasierten Codelesers;
- Fig. 2: eine dreidimensionale Ansicht einer Codelesevorrichtung mit einem Codeleser in Montage an einem Förderband;
- Fig. 3: ein beispielhaftes Ablaufdiagramm für die Anpassung von Fokuslage und Lichtempfindlichkeit durch Erzeugung virtueller Beispielbilder unterschiedlicher angenommener Objekthöhen aus einem physischen Beispielbild;
- Fig. 4: ein mit dem Bildsensor eines Codelesers aufgenommenes Beispielbild;
- Fig. 5: eine Ausschnittvergrößerung des Codes in dem Beispielbild gemäß Figur 4;
- Fig. 6: ein aus dem Beispielbild gemäß Figur 4 erzeugtes virtuelles Beispielbild bei angenommener maximaler Objekthöhe;
- Fig. 7: eine Ausschnittvergrößerung des Codes in dem Beispielbild gemäß Figur 6;
- Fig. 8: ein aus dem Beispielbild gemäß Figur 4 erzeugtes virtuelles Beispielbild bei angenommener minimaler Objekthöhe;
- Fig. 9: eine Ausschnittvergrößerung des Codes in dem Beispielbild gemäß Figur 8;
- Fig. 10: eine erneute Darstellung des Beispielbildes gemäß Figur 4 mit einem darin erkannten Zentrum des Codes sowie einer Veranschaulichung einer für eine Zentrierung erforderlichen Verschiebung;
- Fig. 11: eine Darstellung gemäß Figur 10 nach erfolgter Zentrierung;
- Fig. 12: ein beispielhaftes Ablaufdiagramm für das Auffinden und Prüfen optimaler Parameter, insbesondere einer Aufnahmefrequenz, durch Erzeugung virtueller Beispielbilder mit angenommener Bewegung;
- Fig. 13: vier verschiedene virtuelle Beispielbilder mit unterschiedlichen Verschiebungen in Codelagen mit voller und nur teilweiser Erfassung des Codes; und
- Fig. 14: ein beispielhaftes Ablaufdiagramm für eine Optimierung von Fokuslage und Lichtempfindlichkeit anhand virtueller Beispielbilder.

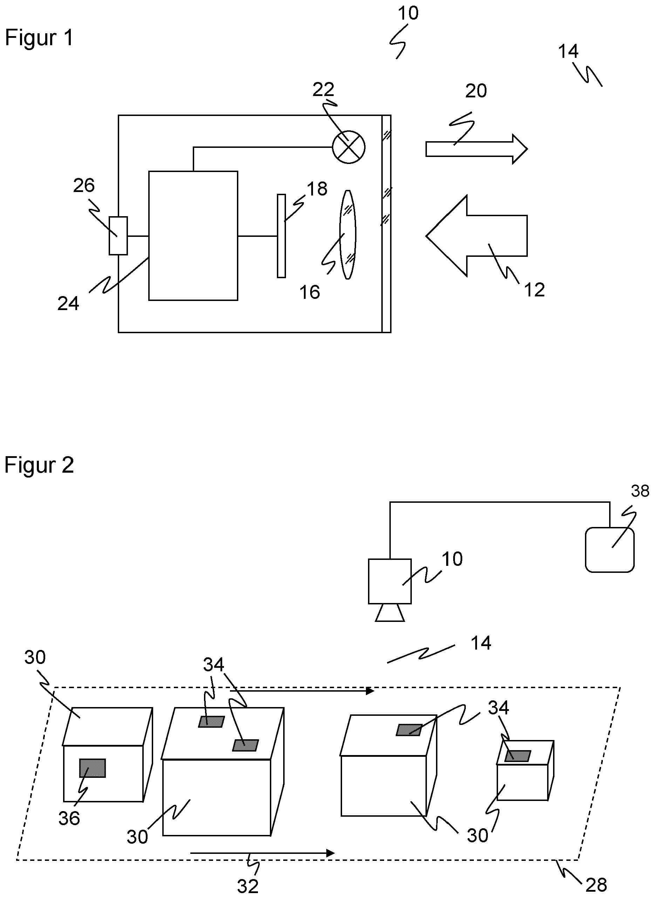

Figur 1 zeigt eine schematische Schnittdarstellung eines kamerabasierten Codelesers 10. Empfangslicht 12 aus einem Erfassungsbereich 14 trifft auf eine Empfangsoptik 16, die das Empfangslicht 12 auf einen Bildsensor 18 führt. Die optischen Elemente der Empfangsoptik 16 sind vorzugsweise als Objektiv aus mehreren Linsen und anderen optischen Elementen wie Blenden, Prismen und dergleichen ausgestaltet, hier aber vereinfachend nur durch eine Linse repräsentiert. Vorzugsweise ist kein Autofokussystem vorgesehen, aber es kann die Möglichkeit einer langsamen Fokusverstellung bestehen (Fix-Fokus, manueller Fokus oder Slow-Fokus).

Um den Erfassungsbereich 14 während einer Aufnahme des Codelesers 10 mit Sendelicht 20 auszuleuchten, umfasst der Codeleser 10 eine optionale Beleuchtungseinheit 22, die in Figur 1 in Form einer einfachen Lichtquelle und ohne Sendeoptik dargestellt ist. In anderen Ausführungsformen sind mehrere Lichtquellen, wie LEDs oder Laserdioden, beispielsweise ringförmig um den Empfangspfad angeordnet, die auch mehrfarbig und gruppenweise oder einzeln ansteuerbar sein können, um Parameter der Beleuchtungseinheit 22 wie deren Farbe, Intensität und Richtung anzupassen. Die Beleuchtungseinheit 22 kann abweichend von der Darstellung extern sein.

Eine Steuer- und Auswertungseinheit 24 ist mit dem Bildsensor 18 und der Beleuchtungseinheit 22 verbunden und für die Steuerungs-, Auswertungs- und sonstigen Koordinierungsaufgaben in dem Codeleser 10 zuständig. Sie umfasst einen oder mehrere Verarbeitungsbausteine, wie ein FPGA und/oder einen Mikroprozessor, und wertet die Bilddaten des Bildsensors 18 aus. Dabei werden Codebereiche in den Bilddaten aufgefunden und deren Codes gelesen. Die Steuer- und Auswertungsfunktionalität kann abweichend von der Darstellung praktisch beliebig auf interne und externe Bausteine verteilt werden, wobei die externen Bausteine auch über Netzwerk oder Cloud angeschlossen sein können. Externe Zuschaltung von Steuer- und Auswertungsfunktionalität ist insbesondere für eine Einrichtphase denkbar, die weiter unten erläutert wird und für die möglicherweise nur vorübergehend Rechen- und Speicherressourcen bereitgestellt werden. Über eine Schnittstelle 26 gibt der Codeleser 10 Informationen aus, wie gelesene Codes oder Bilddaten. Wenn sich die Steuer- und Auswertungseinheit 24 nicht oder nicht vollständig in dem eigentlichen Codeleser 10 befindet, dient die Schnittstelle 26 auch als Verbindung zwischen interner und externer Steuerung und Auswertung.

Figur 2 zeigt den Codeleser 10 in einer bevorzugten Anwendungssituation montiert über einem Förderband 28, welches Objekte 30, wie durch den Pfeil 32 angedeutet, durch den Erfassungsbereich 14 des Codelesers 10 fördert. Die Objekte 30 tragen an ihren Außenflächen Codebereiche 34, die von dem Codeleser 10 erfasst und ausgewertet werden. Diese Codebereiche 34 können von dem Codeleser 10 nur dann erkannt werden, wenn sie auf der Oberseite oder zumindest von oben sichtbar angebracht sind. Daher kann abweichend von der Darstellung in Figur 2 zum Lesen eines etwa seitlich oder unten angebrachten Codes 36 eine Mehrzahl von Codelesern 10 aus verschiedenen Richtungen montiert sein, um eine sogenannte Omnilesung aus allen Richtungen zu ermöglichen. Die Anordnung der mehreren Codeleser 10 zu einem Lesesystem erfolgt in der Praxis meist als Lesetunnel. Das Lesesystem bildet insgesamt eine Codelesevorrichtung, zu dem weitere nicht gezeigte Sensoren gehören können, wie ein Laserscanner zur Volumenmessung oder ein Encoder zur Bestimmung der Fördergeschwindigkeit des Förderbandes 28. Eine übergeordnete Steuerung 38 ist als Beispiel für eine verteilte Implementierung der Steuer- und Auswertungsfunktionalität gezeigt.

Erfindungsgemäß wird eine Codelesevorrichtung, wie sie beispielhaft in Figur 2 gezeigt ist und die einen oder mehrere zu Figur 1 erläuterte Codeleser 10 aufweist, automatisch für eine anschließende Betriebsphase beispielsweise im Rahmen einer Inbetriebnahme eingerichtet. Einrichten bedeutet, dass Aufnahmeparameter des Codelesers 10 oder Decodierparameter eines zum Lesen von Codes eingesetzten Decoders beziehungsweise in dem Codeleser 10 implementierten Decodierverfahrens gesetzt werden. Ein solcher Parametersatz wird auch als Arbeitspunkt der Codelesevorrichtung bezeichnet. Ein optimaler Arbeitspunkt berücksichtigt die Dynamik des Betriebs, insbesondere die Bewegung und die unterschiedlichen Objekthöhen. Erfindungsgemäß werden virtuelle Beispielbilder erzeugt, die einer denkbaren späteren Lesesituation entsprechen, die aber während des Einlesens physisch gar nicht aufgenommen wurden. Dabei wird mit Objekthöhe immer diejenige Dimension der zu erfassenden Objekte 30 bezeichnet, die für den Abstand zwischen Objekt 30 und Codeleser 10 maßgeblich ist. Das ist von der Vorstellung einer Perspektive von oben geleitet, aber entsprechende Abhängigkeiten ergeben sich auch in anderer Perspektive aus anderen Objektdimensionen, für die dann Objekthöhe stellvertretend stehen soll.

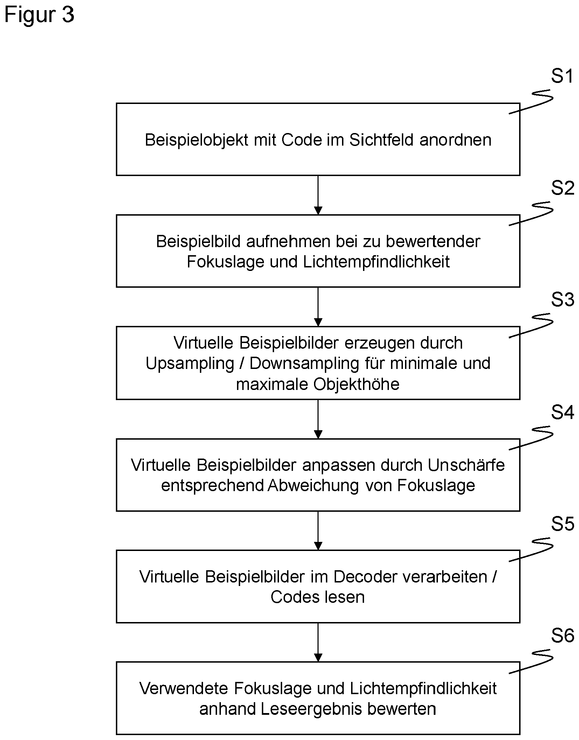

Figur 3 zeigt ein beispielhaftes Ablaufdiagramm für die Erzeugung und Bewertung virtueller Beispielbilder für Objekte 30 unterschiedlicher angenommener Objekthöhe. Das illustriert gewissermaßen einen einzelnen Optimierungszyklus der Einrichtphase, der einen bestimmten Arbeitspunkt austestet, wobei es hier um die beiden Parameter Fokuslage und Lichtempfindlichkeit (Gain) geht, weitere Parameter werden gesondert optimiert oder vorbelegt. Ausreichend scharfe Bilder sind eine Grundvoraussetzung für eine hohe Leserate, und ebenso sollten eine Übersteuerung im Nahbereich sowie zu dunkle Bilder im Fernbereich verhindert werden. Zu dem Arbeitspunkt gehört vorzugsweise eine Belichtungszeit, die sich aber vergleichsweise einfach zu Beginn des Optimierungsprozesses als Quotient von Modulgröße und Fördergeschwindigkeit berechnen lässt. Die Optimierung findet einen Arbeitspunkt, in dem eine stabile, sichere Lesung über alle erwarteten Objekthöhen möglich ist, oder alternativ wird festgestellt, dass mit dieser Codelesevorrichtung das volle gewünschte Objekthöhenintervall mit keinem Arbeitspunkt abgedeckt werden kann.

In einem Schritt S1 wird zunächst ein Beispielobjekt mit einem Code im Erfassungsbereich 14 angeordnet. Das Beispielobjekt sollte repräsentativ für die später zu erfassenden Objekte 30 sein. Die Präsentation erfolgt vorzugsweise im Stillstand. Das erleichtert das Vorgehen und ermöglicht es, während der Optimierung wiederholt Aufnahmen mit unterschiedlichen Parametern zu erzeugen.

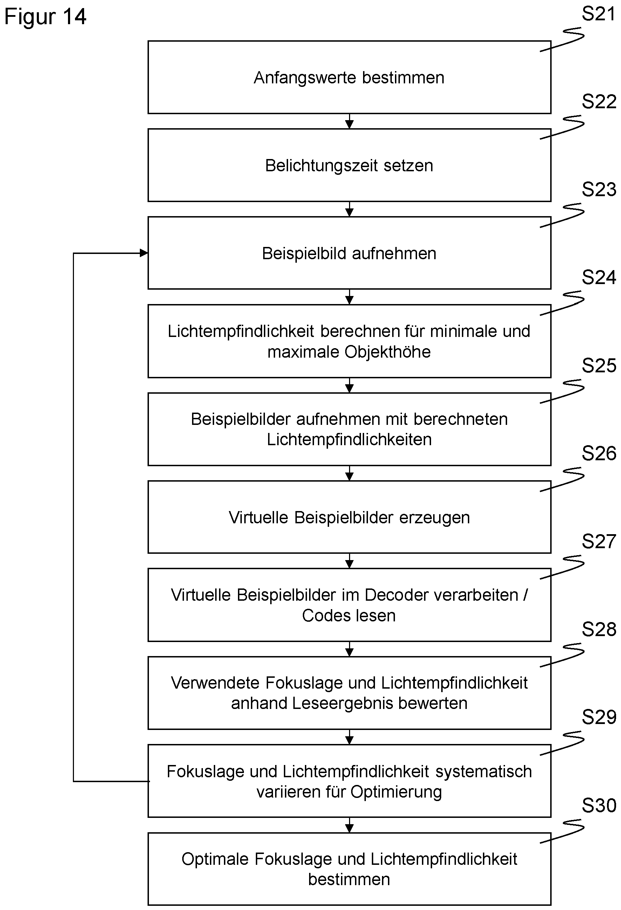

In einem Schritt S2 wird ein Beispielbild des Beispielobjekts aufgenommen. Dabei sind die Parameter Fokuslage und Lichtempfindlichkeit vorzugsweise auf in diesem Optimierungszyklus zu testende Werte eingestellt. Eine mögliche Umsetzung der Optimierung wird später unter Bezugnahme auf die Figur 14 im Detail vorgestellt. Anfangs werden Fokuslage und Lichtempfindlichkeit beispielsweise auf mittlere oder sonstige generische Werte gesetzt, oder es wird zunächst eine Optimierung für den Stillstand vorgeschaltet, eine sogenannte Erstlesung. In späteren Optimierungszyklen werden dann andere Fokuslagen und Lichtempfindlichkeiten getestet, sei es schrittweise in einer iterativen Schleife oder mit den jeweiligen gegenwärtigen Optimierungsergebnissen, die dann im Laufe der Optimierungszyklen verfeinert werden. In einem Fixfokussystem ist die Fokuslage nicht veränderbar, es kann dann nur die Lichtempfindlichkeit optimiert werden. Ansonsten wird von einem Slow-Fokus-System ausgegangen, dass langsame Fokusveränderungen erlaubt. Eine weitere Alternative ist ein manueller Fokus, der vom Einrichter jeweils nach genauen Vorgaben des automatischen Einrichtverfahrens verstellt wird.

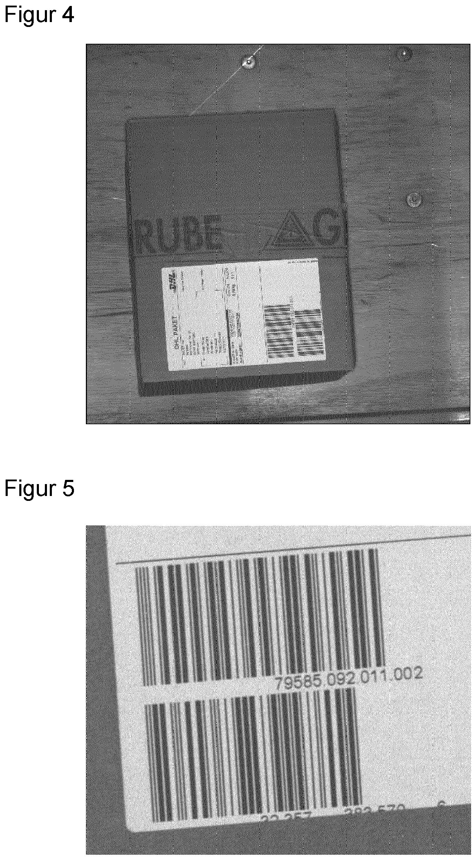

Figur 4 zeigt zu Illustrationszwecken ein Beispielbild, das bei gegenwärtig eingestellter Fokuslage und Lichtempfindlichkeit aufgenommen wurde. Es handelt sich hier um eine echte Aufnahme, ein physisches Bild des Beispielobjekts. Figur 5 zeigt eine Ausschnittvergrößerung des Codebereichs.

Zurück zu Figur 3 werden in einem Schritt S3 aus dem physischen Beispielbild virtuelle Beispielbilder erzeugt, die eine Erfassungssituation simulieren, als hätte das Beispielobjekt eine minimale beziehungsweise maximale Objekthöhe. Die Objekthöhen entsprechen einem Leseabstand zwischen Codeleser 10 und Objekt 30. Minimale und maximale Objekthöhe sind eine Vorgabe der Anwendung, fehlen diese Angaben, so kann für die minimale Objekthöhe der Leseabstand zur Förderebene und für die maximale Objekthöhe ein gerade noch verarbeitbarer Nahbereich des Codelesers 10 angenommen werden.

Für die Anpassung an die angenommene minimale und maximale Objekthöhe wird die Auflösung des im Schritt S2 aufgenommenen Beispielbildes durch ein Herauf- oder Herunterinterpolieren angepasst (Upsampling, Downsampling). Als Ankerpunkt dient vorzugsweise der Schwerpunkt des Codes oder Codebereichs. Ein beispielhafter geeigneter Interpolationsalgorithmus ist eine bikubische Interpolation. Basis für die Verfremdung oder Erzeugung virtueller Beispielbilder ist somit das real aufgenommene Beispielbild des Beispielobjekts. Außer der reinen Auflösung je nach Objekthöhe wird bevorzugt auch die unterschiedliche Lichtenergie für die unterschiedlichen Leseabstände berücksichtigt. Dazu kann insbesondere im Schritt S2 mehrfach bei verschiedenen Lichtempfindlichkeiten aufgenommen werden, um die Remissionseigenschaften des Beispielobjekts zu berücksichtigen. Welche Lichtempfindlichkeiten dazu entsprechend der minimalen und maximalen Objekthöhe eingestellt werden können, wird später zu Figur 14 genauer erläutert.

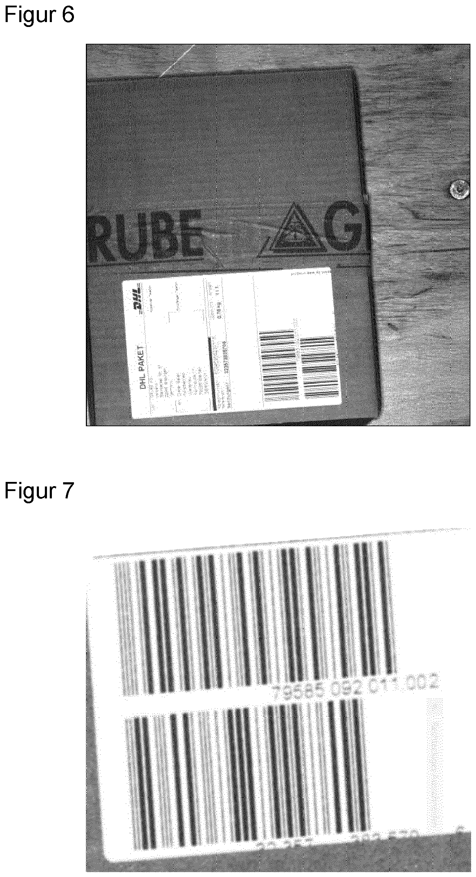

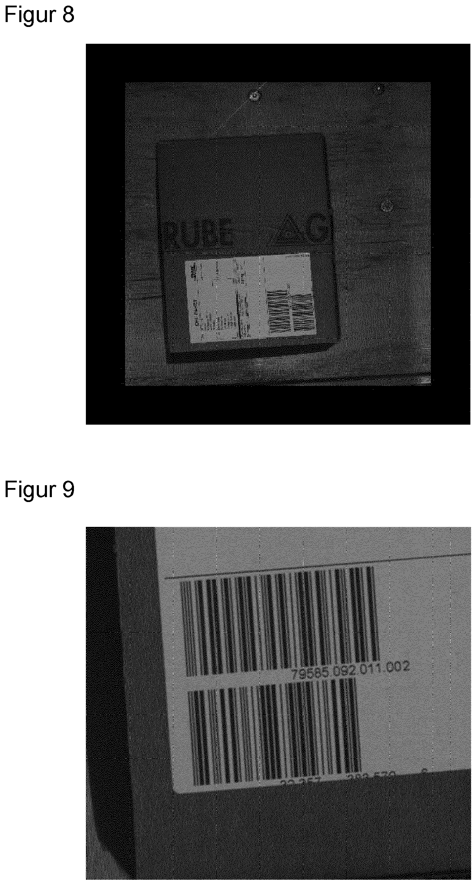

Figur 6 zeigt zu Illustrationszwecken ein aus dem physischen Beispielbild erzeugtes virtuelles Beispielbild bei Annahme einer maximalen Objekthöhe, Figur 8 ein entsprechendes virtuelles Beispielbild bei Annahme einer minimalen Objekthöhe. Die Figuren 7 und 9 zeigen zugehörige Ausschnittvergrößerungen des jeweiligen Codebereichs.

Wieder zurück zu Figur 3 wird in einem optionalen Schritt S4 noch ein Schärfegrad berücksichtigt, da die minimale und maximale Objekthöhe regelmäßig höchstens noch im Randbereich des Tiefenschärfenbereichs der eingestellten Fokuslage liegen wird. Die virtuellen Beispielbilder sollten für eine realistische Annahme den real noch erwartenden Schärfegrad aufweisen und nicht denjenigen des im Schritt 2 gewonnenen physischen Beispielbildes. Eine Möglichkeit, eine Abweichung aus der idealen Fokuslage beziehungsweise zu einem Tiefenschärfenbereich zu berücksichtigen, ist die Faltung mit einem Gausskern. Das stellt eine gute Annäherung an die eigentliche Punktspreizfunktion (PSF, Point Spread Function) des Objektivs beziehungsweise der Empfangsoptik 16 dar. Die passende Standardabweichung kann bezüglich der möglichen Fokuslagen in einer Nachschlagtabelle (LUT, Lookup Table) abgelegt oder berechnet werden. Es ist auch denkbar, Filterkerne mit der Gaussnäherung oder aus einem alternativen oder genaueren Modell vorauszuberechnen und in einem Speicher zum Nachschlagen bereitzuhalten.

In einem Schritt S5 werden die virtuellen Beispielbilder und gegebenenfalls auch das physische Beispielbild dem Decoder zur Bewertung vorgelegt. Dabei werden vorzugsweise genau diejenigen Decodierverfahren angewandt, die später auch im Betrieb zum Einsatz kommen werden.

In einem Schritt S6 werden die verwendete Fokuslage und die verwendete Lichtempfindlichkeit anhand des Leseergebnisses aus Schritt S5 bewertet. Dabei kann lediglich binär festgestellt werden, ob der Code gelesen wurde (GoodRead) oder nicht (NoRead).

Alternativ erzeugt der Decoder ein quantitatives Qualitätsmaß. Im Rahmen der Optimierung, in dem der zu Figur 3 geschilderte Optimierungszyklus vorzugsweise mehrfach durchlaufen wird, kann ein solches Qualitätsmaß verwendet werden, um geeignete Werte für Fokuslage und Lichtempfindlichkeit für den neuen Optimierungszyklus zu bestimmen. Alternativ werden Fokuslagen und Lichtempfindlichkeiten über gewisse Parameterintervalle systematisch durchprobiert, und das Qualitätsmaß wird abschließend genutzt, um die besten Fokuslagen und Lichtempfindlichkeiten zu finden. Das Qualitätsmaß bestimmt, wie verlässlich das Codelesen möglich war, um vorzugsweise auch Reserven für schlechtere Bildqualitäten vorzuhalten. Ein weiteres Kriterium ist die Geschwindigkeit, denn kurze Decoderzeiten sparen Rechenressourcen und ermöglichen eine schnellere Aufnahmefrequenz (Framerate).

Zusammenfassend werden demnach aus einem realen Beispielbild vorzugsweise nur eines einzigen Beispielobjekts und wiederum vorzugsweise im Stillstand zusätzliche virtuelle Beispielbilder erzeugt, um die spätere dynamische Betriebssituation abzubilden. Mit der auch im Betrieb verwendeten Decoder-Engine als Bewertungsinstanz wird ein optimaler Arbeitspunkt aufgefunden, hier insbesondere in Bezug auf die Einstellung von Fokuslage und Lichtempfindlichkeit. Wird die Decoder-Engine verbessert, etwa im Rahmen eines Firmware-Updates, so ist eine Nachjustierung des Arbeitspunktes durch erneutes Durchlaufen der Optimierung sehr einfach möglich, etwa wenn die neue Decoder-Engine besser mit unscharfen Codes zurechtkommt.

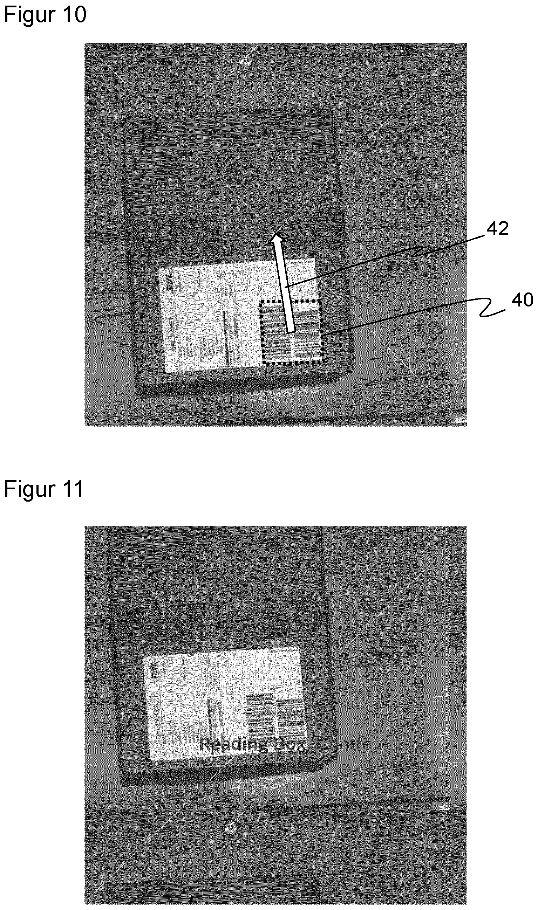

Die Figuren 10 und 11 illustrieren eine Zentrierung eines aufgenommenen Beispielbilds auf den Schwerpunkt des Codes oder Codebereichs, um einen geeigneten Ankerpunkt für nachfolgend erzeugte virtuelle Bilder, insbesondere eine Auflösungsveränderung zu erhalten. Wie in Figur 10 gezeigt, wird eine Umrahmung 40 (Bounding Box) um den Code oder, falls es mehrere gibt, um die Codes gelegt. Deren Versatz zum Mittelpunkt soll durch die Zentrierung ausgeglichen werden, wie durch einen Pfeil 42 angedeutet. Die Figur 11 zeigt das Ergebnis der beispielhaften Zentrierung. Dabei werden wie auf einem Torus Bildinhalte, die über einen Rand hinausgeschoben werden, am gegenüberliegenden Rand wieder eingefügt (Wrap Around).

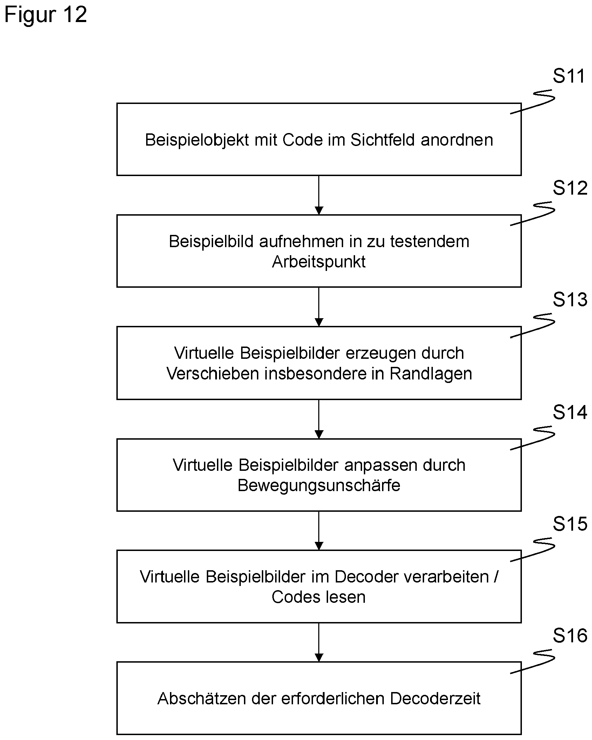

Figur 12 zeigt ein beispielhaftes Ablaufdiagramm für die Erzeugung und Bewertung virtueller Beispielbilder für Objekte 30 in Bewegung. Die Schritte ähneln an einigen Stellen denjenigen der Figur 3 und werden daher zum Teil nur verkürzt erläutert, wobei sich weitere Details übertragen lassen. Es sollen nun aus dem aufgenommenen Beispielbild virtuelle Beispielbilder erzeugt werden, die einer Lesung in Bewegung entsprechen, wobei Codes über einen bevorzugten Erfassungspunkt hinwegwandern und womöglich nur partiell aufgenommen werden. Um dies zu simulieren, werden Bildinhalte verschoben, und vorzugsweise wird eine Bewegungsunschärfe simuliert.

In Schritten S11 und S12 wird zunächst wieder ein Beispielobjekt mit Code im Erfassungsbereich 14 aufgenommen und ein Beispielbild erzeugt. Dabei ist ein in diesem Optimierungszyklus getesteter Arbeitspunkt eingestellt. Wie immer bedeutet Arbeitspunkt eine bestimmte Einstellung von Aufnahmeparametern, wie Belichtungszeit, Fokuslage oder Lichtempfindlichkeit, und/oder Decodierparametern. Sofern in diesem Arbeitspunkt andere virtuelle Beispielbilder erzeugt werden, müssen diese Schritte nur einmal durchgeführt werden, beispielsweise können die Schritte S1 und S2 gemäß Figur 3 und die Schritte S11 und S12 gemäß Figur 12 zusammenfallen.

In einem Schritt S13 wird mindestens ein virtuelles Beispielbild entsprechend einer simulierten Bewegung des aufgenommenen Beispielobjekts erzeugt. Beim späteren Lesen in Bewegung werden die Codes auf der einen Seite in den Erfassungsbereich 14 hinein, über einen bevorzugten Aufnahmepunkt hinweg und auf der anderen Seite wieder hinauswandern. In dieser Zeitspanne können im Betrieb mehrere Aufnahmen erzeugt werden. In einigen dieser Aufnahmen werden einzelne, im besten Falle alle Codes, voll sichtbar sein, in anderen nur Teile von Codes. Es werden nun beispielsweise virtuelle Beispielbilder derart erzeugt, dass ein Code mindestens einmal vollständig und mindestens einmal in Randlage erfasst ist, vorzugsweise je zweimal, womit Aufwand und Ergebnis gut ausbalanciert werden. Bei einem Barcode kann darauf geachtet werden, die Verschiebung je nach Orientierung von dessen Codeelementen zu wählen, bei 2D-Codes spielt das keine Rolle. Es sollten jedoch vorzugsweise bei den virtuellen Beispielbildem mit 2D-Code in einer Randlage zumindest noch Teile der Finder-Patterns sichtbar sein, damit das Decodierverfahren überhaupt ernsthaft einen Decodierungsversuch unternimmt und somit realistische Bearbeitungszeiten benötigt werden.

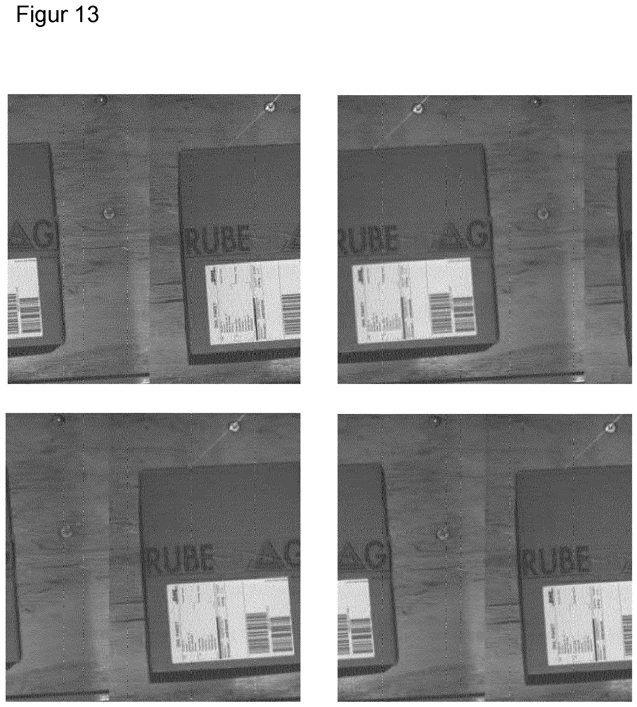

Figur 13 zeigt ein Beispiel von vier solchen virtuellen Beispielbildern, wobei eines dieser Beispielbilder auch das ursprünglich physisch aufgenommene Bild sein kann. Oben links und unten rechts befindet sich der Codebereich in einer Randlage, oben rechts und unten links wird der Code voll erfasst. Über den Rand hinausgeschobene Bildinhalte werden vorzugsweise auf der anderen Seite wieder eingefügt (Wrap Around).

Zurück zu Figur 12 wird in einem optionalen Schritt S14 nun noch eine Bewegungsunschärfe simuliert (motion blur). Die Ursache für die Unschärfe ist eine andere als bei einer Defokussierung in Schritt S4 gemäß Figur 3. Das rechnerische Vorgehen kann aber ganz ähnlich sein, beispielsweise eine Faltung mit einem Gausskern vorgenommen werden, bei dem die Standardabweichung der Modulbreite entspricht. Diese Modulbreite ist beispielsweise vorgegeben oder aus früheren Schritten des Einrichtens bekannt. Insbesondere kann sie nach jedem erfolgreichen Leseversuch eines Codes rekonstruiert werden, denn es liegen dann das Codebild mit seinen Pixelbereichen und deren Dimensionen ebenso wie die Kenntnis über die Codemodule vor.

In einem Schritt S15 werden die virtuellen Beispielbilder analog zum Schritt S5 gemäß Figur 3 dem Decodierverfahren unterzogen, vorzugsweise mit der Decoder-Engine, die im Betrieb zum Einsatz kommen wird.

Bei der Auswertung im Schritt S16 ist aber nun abweichend von Schritt S6 der Figur 3 vorzugsweise das Ziel nicht festzustellen, wie gut sich der Arbeitspunkt für das Codelesen eignet beziehungsweise noch verbessern lässt. Vielmehr soll die erforderliche Decoderzeit abgeschätzt werden, beispielsweise eine mittlere oder maximale Decoderzeit. Es wird im Betrieb nur eine begrenzte Zeit zwischen zwei Aufnahmen zur Verfügung stehen, daher ist diese Decoderzeit ein wichtiges Maß. Insbesondere lässt sich damit eine optimale Aufnahmefrequenz auffinden. Zu der Decoderzeit tragen maßgeblich Codes in Randlage bei, weil das Decodierverfahren vielfach wiederholt versucht, diese Codes zu lesen. Durch die virtuellen Beispielbilder werden realistische Szenarien des späteren Betriebs vorweggenommen. Die Zeitabschätzung bezieht das mindestens einmalige, beispielsweise zweifache Lesen eines jeden Codes ein, und dabei dürfen sich die Codes teilweise am Rand befinden, so dass nicht etwa ein zufälliges günstiges physisches Beispielbild zu kurze Decoderzeiten vorspiegelt.

Die beiden zu Figur 3 und Figur 12 erläuterten Vorgehensweisen sind miteinander kombinierbar. Das meint zum einen, dass beide Verfahren nacheinander oder ineinander verschachtelt durchgeführt werden können. Zudem ist aber auch denkbar, virtuelle Beispielbilder zu erzeugen, die zugleich in ihren Aufnahmeparametern, wie Fokuslage und Lichtempfindlichkeit, als auch entsprechend einer Bewegung verändert sind.

Figur 14 zeigt ein Ablaufschema für eine Optimierung des Arbeitspunktes in einer beispielhaften detaillierten Umsetzung. Die Erläuterung betrifft die Einstellung einer optimalen Fokuslage und Lichtempfindlichkeit bei unterschiedlichen zu erwartenden Objekthöhen und ergänzt diejenige zu Figur 3. Die Optimierung anderer Aufnahme- oder Decodierparameter erfolgt jedoch in ganz ähnlicher, übertragbarer Weise.

Verschiedene Rahmenbedingungen sind vorzugsweise im Voraus bekannt. Dazu zählen die erwartete minimale und maximale Objekthöhe, die Installationshöhe des Codelesers 10, dessen Orientierung, oder eine Blendeneinstellung, die alternativ mit einem erfindungsgemäßen Verfahren optimiert wird. Bekannt oder vorausberechnet werden Abbildungsmaßstäbe oder Lesefeldgrößen. Die Bewegungsgeschwindigkeit der Objekte 30 beziehungsweise des Förderbandes 28 wird ebenfalls vorgegeben oder vorab gemessen. Die Höhe des präsentierten Beispielobjekts kann vorgegeben oder gemessen werden, beispielsweise anhand einer optimalen Fokuslage. Dabei kann die Montagehöhe und Orientierung des Codelesers 10 zur trigonometrischen Umrechnung zwischen Objekthöhen und Abständen zwischen Objekt 30 und Codeleser 10 verwendet werden.

Vorzugsweise sind noch zwei Beziehungen bekannt, die in beliebiger Form abgespeichert sein können, beispielsweise als Funktion oder Nachschlagtabelle (LUT, Lookup-Table). Diese Beziehungen können modelliert, simuliert oder beispielsweise in der Endfertigung des Codelesers 10 eingelernt werden. Die eine Beziehung betrifft die Abhängigkeit der Lichtempfindlichkeit vom Leseabstand d, also eine Funktion Gain(d) für ein Normobjekt bekannten Remissionsverhaltens. Die zweite Beziehung betrifft die Unschärfe bei Abweichung von einer optimalen Fokuslage, die insbesondere in Form von Standardabweichungen eines Gausskerns abgelegt oder auch aus Objektiveigenschaften abgeleitet sein kann.

In einem Schritt S21 werden Anfangswerte bestimmt. Dies können feste Vorbelegungen sein. Vorzugsweise wird in einer sogenannten Erstlesung eine an sich bekannte Optimierung auf das stationäre Beispielobjekt vorgenommen. Im Unterschied zum Kern der Erfindung werden dabei noch keine virtuellen Beispielbilder erzeugt. Insbesondere werden bei der Erstlesung Anfangswerte für wichtige Aufnahmeparameter wie Belichtungszeit, Fokuslage und Lichtempfindlichkeit gefunden, mit denen der Code des Beispielobjekts gelesen werden kann. Dabei kann auch eine Auswahl von Decodierverfahren beziehungsweise eine Konfiguration von Decodierparametern erfolgen. Je besser die Anfangswerte auf das physische Beispielbild mit dessen spezifischen Remissionseigenschaften eingestellt sind, umso schneller wird eine erfindungsgemäße Optimierung für die dynamische Betriebssituation gelingen, und umso unwahrscheinlicher wird es, dass die Optimierung sich im Parameterraum beispielsweise in lokalen Extrema verirrt.

In einem Schritt S22 wird die Belichtungszeit gesetzt. Das ist vergleichsweise einfach, da sich dies als Quotient der Modulgröße oder Modulbreite und der Bewegungsgeschwindigkeit berechnen lässt. Die Bewegungsgeschwindigkeit ist bekannt oder kann gemessen werden, die Modulgröße wiederum ist ebenfalls bekannt oder spätestens nach erfolgreicher Erstlesung in Kenntnis der sonstigen Installations- und Aufnahmeparameter bei der Erstlesung bestimmbar. Mit der so gesetzten Belichtungszeit wird die Bewegungsunschärfe auf höchstens eine Modulgröße begrenzt, wobei angenommen wird, dass das Decodierverfahren dies noch tolerieren kann. Diese Überlegung sind übrigens auch der Grund für das Ausmaß einer simulierten Bewegungsunschärfe im Schritt S14 der Figur 12.

In einem Schritt S23 wird ein Beispielbild des präsentierten Beispielobjekts aufgenommen. Im ersten Durchlauf der nun folgenden Optimierung werden dazu die Aufnahmeparameter, insbesondere die Fokuslage und Lichtempfindlichkeit, auf die Anfangswerte aus der Erstlesung oder alternativ generische Anfangswerte gesetzt, beispielsweise eine Fokuslage für eine mittlere Objekthöhe. In weiteren Schleifendurchläufen sind die Aufnahmeparameter variiert. Es kann direkt ein Decodierversuch erfolgen, denn wenn dieser nicht erfolgreich ist, kann die aktuelle Einstellung, die nicht einmal das Beispielbild verarbeiten kann, das gesuchte Optimum nicht sein. Es würde dann der Schleifen durchlauf abgekürzt oder die gesamte Optimierung abgebrochen, um es mit einer neuen Variation der Aufnahmeparameter beziehungsweise besseren Anfangswerten erneut zu versuchen.

In den Schritten S24 und S25 werden nun optional noch zusätzliche physische Beispielbilder bei Lichtempfindlichkeiten aufgenommen, die der minimalen und maximalen Objekthöhe entsprechen. Es sollen also mit anderen Worten Beispielbilder erzeugt werden, die so hell oder dunkel sind, als hätte das Beispielobjekt die minimale oder maximale Objekthöhe. Im Schritt S24 werden dafür zunächst passende Lichtempfindlichkeiten berechnet. Die Lichtempfindlichkeit für die gegenwärtige Fokuslage ist als Anfangswert beziehungsweise in späteren Durchläufen der Optimierungsschleife durch Anpassung an die jeweilige neue Fokuslage bekannt. Oben wurde bereits die Beziehung Gain(d) eingeführt, mit der sich für ein Referenzobjekt fester Remissionseigenschaften die Lichtempfindlichkeit auf verschiedene Abstände umrechnen lässt. Damit kann also die Lichtempfindlichkeit für das Beispielobjekt in der Fokuslage reskaliert werden, um passende Lichtempfindlichkeiten für ein Objekt minimaler und maximaler Höhe zu finden.

Im Schritt S25 werden nun mit den berechneten Lichtempfindlichkeiten bei gleicher Fokuslage zwei weitere physische Beispielbilder für ein Objekt minimaler und maximaler Höhe aufgenommen. Vorsichtshalber kann auch das ursprüngliche Beispielbild nochmals aufgenommen werden, um Effekte durch zwischenzeitliche Bewegung auszuschließen. Es liegen nun drei physische Beispielbilder mit drei unterschiedlichen Helligkeiten vor.

In einem Schritt S26 werden nun virtuelle Beispielbilder erzeugt. Das wurde im Prinzip zu Figur 3, insbesondere deren Schritte S3 und S4, bereits erläutert. Es wird jeweils die Auflösung erhöht und erniedrigt (Upsampling/Downsampling) und das entstehende virtuelle Beispielbild abgeschnitten (Cropping, bei Upsampling) oder an den Rändern aufgefüllt (bei Downsampling). Dem kann eine Zentrierung auf den Codeschwerpunkt vorausgehen. Vorzugsweise werden die virtuellen Beispielbilder noch mit einer Unschärfe entsprechend der angenommenen Abweichung von der Fokuslage angepasst, siehe Schritt S4 in Figur 3.

In einem Schritt S27 werden dann die virtuellen Beispielbilder mit dem Decodierverfahren bearbeitet. Ein jeweiliges binäres oder nummerisches Qualitätsmaß wird gespeichert. Es ist denkbar, dass einige Codes nicht lesbar sind (NoRead), auch dieses Ergebnis wird gespeichert. Sollte dies auch zum Abschluss der Optimierung noch der Fall sein, so ist die gesamte gewünschte Spanne an Objekthöhen mit keinem festen Satz von Aufnahmeparametern verarbeitbar.

In einem Schritt S28 wird das Decodierergebnis bewertet. Dies dient dazu, eine geeignete Variation für den nächsten Optimierungszyklus zu finden. Bei einem einfachen Optimierverfahren, das beispielsweise einen Parameterbereich mit einer Schrittweite durchiteriert, kann die zwischenzeitliche Bewertung entfallen.

In einem Schritt S29 werden nun die Aufnahmeparameter, insbesondere Fokuslage und Lichtempfindlichkeit, systematisch für einen weiteren Optimierungszyklus ab Schritt S33 variiert. Hier wird auch eine Abbruchbedingung geprüft, beispielsweise ob eine verfügbare Optimierungszeit abgelaufen, eine vorgegebene Anzahl Optimierungszyklen abgearbeitet oder ein gewünschtes allgemeines Qualitätsmaß erreicht ist. Dabei sind alle gängigen Optimierungen vorstellbar. Im einfachsten Fall wird ein Parameterbereich um die Anfangswerte systematisch mit einer bestimmten Schrittweite ausgetestet. Andere Optimierungen, wie ein Hill-Climbing-Verfahren, verändern gemäß der Bewertung in Schritt S28 die Aufnahmeparameter in einer Richtung, in der eine Verbesserung erwartet wird.

In einem abschließenden Schritt S30, nachdem eine Abbruchbedingung erfüllt ist, wird die Optimierung beendet. Bei einem einfachen iterativen Verfahren liegen nun Bewertungen für die verschiedenen getesteten Aufnahmeparameter vor. Daraus kann ein Optimum ausgewählt oder interpoliert werden. Das Optimum wird dann also so gesetzt, dass es für möglichst viele erwartete Objekthöhen gut passt. Andere Optimierungsverfahren haben bereits im Verlauf der Optimierung die besten Werte der Aufnahmeparameter angenommen, so dass eine abschließende Bewertung nach Erfüllen der Abbruchbedingung entfällt. In den Optimierungsprozess oder das Optimierungsergebnis kann eine Gewichtung erwarteter Objekte beziehungsweise Objekthöhen eingehen, wenn beispielsweise viele flache oder hohe Objekte erwartet werden. Mit den derart aufgefundenen Aufnahmeparametern, insbesondere Fokuslage und Lichtempfindlichkeit, wird der Codeleser 10 für die folgende Betriebsphase konfiguriert.

Wenn der Codeleser 10 keine Fokusverstellung aufweist, können dennoch die übrigen Parameter für dessen dann fixe, einzige Fokuslage optimiert werden. Auch eine Kombination mit einer manuellen Fokusverstellung ist denkbar. Der automatische Optimierungsprozess kann dann im Schritt S29 oder S30 detaillierte Anweisungen an den Einrichter geben, wie der Fokus für den nächsten Optimierungsschritt beziehungsweise den folgenden Betrieb einzustellen ist.

Die Figur 14 bezieht sich verstärkt auf das Setzen von Fokuslage und Lichtempfindlichkeit. Der Ablauf für das Lesen in Bewegung ist aber recht ähnlich, wobei ergänzend die Erläuterungen zu Figur 12 heranzuziehen sind. Die Optimierungen für Fokuslage und Lichtempfindlichkeit einerseits und für Bewegung andererseits können nacheinander oder ineinander verzahnt verfolgen. In den Schritten S24 bis S26 werden Bewegungen statt oder in Ergänzung zu virtuellen Objekthöhen berücksichtigt, also Bildinhalte verschoben wie zu den Schritten S13 und S14 der Figur 12 erläutert. Dabei werden bevorzugt virtuelle Beispielbilder erzeugt, in denen Codes vollständig sowie in Randlage enthalten sind, um dem Decodierverfahren ein realistisches Spektrum von Beispielbildern anzubieten und so eine gute Abschätzung der Decoderzeit zu erhalten. Die Bildsequenzen für die simulierte Bewegung können nur für eine feste Objekthöhe, aber auch für eine fiktive minimale beziehungsweise maximale Objekthöhe erzeugt werden. Daraus lassen sich womöglich ergänzende Qualitätsmaße für Fokuslage und Lichtempfindlichkeit gewinnen. Eine realistische Einschätzung der Decoderzeit erlaubt die Bestimmung einer erzielbaren Aufnahmefrequenz (Framerate) in dem jeweils getesteten Arbeitspunkt. Das kann genutzt werden, um die Aufnahmefrequenz so einzustellen, es kann aber auch ein Kriterium sein, den Arbeitspunkt zu verwerfen oder wenigstens dessen Beurteilung im Sinne der Optimierung herabzusetzen, weil der Decoder hier zu langsam wäre.

Mit einem ähnlichen Ablauf, oder darin integriert beziehungsweise daran angeschlossen, können Modulgrößen-Intervalle getestet werden. Dazu werden virtuelle Beispielbilder mit Skalierungsfaktoren erzeugt, so dass zu lesende minimale und maximale Modulgrößen oder Modulbreiten entstehen. Es wird dann versucht, dies zu decodieren. Damit ist dann sichergestellt, dass Modulgrößen in dem Intervall gelesen werden können, beziehungsweise eine Ausgabe möglich, welche Modulgrößen lesbar sein werden.

Zusammenfassend erfolgt eine Optimierung auf Basis einer Mischung aus realen Effekten wie Belichtungszeit, Fokuslage und Lichtempfindlichkeit für physisch aufgenommene Beispielbilder in Kombination mit künstlicher oder rechnerischer Verfremdung für virtuelle Beispielbilder. Damit können unter anderem unterschiedliche Objekthöhen und Bewegung in die Optimierung einbezogen werden, also dynamische Effekte des späteren Betriebs, die während der Präsentation des Beispielobjekts real nicht existieren. Dabei genügt eine sehr geringe Anzahl von physischen Aufnahmen vorzugsweise nur eines einzigen präsentierten Beispielobjekts, und auch die Anzahl der daraus erzeugten virtuellen Beispielbilder kann gering bleiben. Das ist also keinesfalls vergleichbar mit einem dynamischen Anpassen an eine Vielzahl realer Objekterfassungen, wie teilweise im einleitend genannten Stand der Technik, oder gar der erforderlichen Anzahl Beispiele für ein Training bei maschinellem Lernen.

Die physischen und/oder realen Beispielbilder können angezeigt werden, um den Optimierungsprozess zu verfolgen und gegebenenfalls auch einzugreifen, also beispielsweise virtuelle Beispielbilder als nicht realistisch oder im Betrieb nicht zu erwarten auszuschließen. Der gesamte Optimierungsprozess könnte prinzipiell insgesamt über Nachschlagtabellen umgesetzt werden. Das ist jedoch äußerst aufwändig und zudem unflexibel beispielsweise gegenüber Änderungen der Decoderversion.

## Patentansprüche

1. Verfahren zum automatischen Einrichten einer Codelesevorrichtung (10, 38), die einen Bildsensor (18) und eine Steuer- und Auswertungseinheit (24, 38) aufweist, wobei mit dem Bildsensor (18) ein Beispielbild eines im Sichtfeld (14) des Bildsensors (18) angeordneten Beispielobjekts mit einem Beispielcode aufgenommen wird und anhand einer Auswertung des Beispielbildes mindestens ein Aufnahmeparameter und/oder mindestens ein Decodierparameter für den Betrieb der Codelesevorrichtung (10, 38) festgelegt wird,
**dadurch gekennzeichnet,**
**dass** aus dem Beispielbild durch rechnerische Veränderung weitere Beispielbilder erzeugt werden und der mindestens eine Aufnahmeparameter und/oder der mindestens eine Decodierparameter anhand einer Auswertung der weiteren Beispielbilder festgelegt wird.

2. Verfahren nach Anspruch 1,
wobei die Auswertung eines Beispielbildes einen Decodierversuch aufweist.

3. Verfahren nach Anspruch 1 oder 2,
wobei der mindestens eine Aufnahmeparameter eine Lichtempfindlichkeit, eine Belichtungszeit, eine Bildwiederholfrequenz und/oder eine Fokuslage einer dem Bildsensors vorgeordneten Optik (16) aufweist.

4. Verfahren nach einem der vorhergehenden Ansprüche,
wobei weitere Beispielbilder für unterschiedliche Objektgrößen erzeugt werden, insbesondere je ein weiteres Beispielbild für eine im nachfolgenden Betrieb erwartete minimale Objekthöhe und maximale Objekthöhe.

5. Verfahren nach Anspruch 4,
wobei die weiteren Beispielbilder durch Auflösungserhöhung oder Auflösungsverringerung erzeugt werden, insbesondere mittels bikubischer Interpolation.

6. Verfahren nach Anspruch 4 oder 5,
wobei die weiteren Beispielbilder mit einer Unschärfe entsprechend einer erwarteten Fehlfokussierung erzeugt werden.

7. Verfahren nach einem der vorhergehenden Ansprüche,
wobei weitere Beispielbilder durch Verschieben von Bildinhalten erzeugt werden.

8. Verfahren nach Anspruch 7,
wobei die weiteren Beispielbilder mit einer erwarteten Bewegungsunschärfe erzeugt werden.

9. Verfahren nach einem der vorhergehenden Ansprüche,
wobei zunächst ein Anfangswert für den mindestens einen Aufnahmeparameter und/oder Decodierparameter bestimmt wird, so dass der Beispielcode gelesen werden kann.

10. Verfahren nach einem der vorhergehenden Ansprüche,
wobei der mindestens eine Aufnahmeparameter und/oder Decodierparameter durch ein Optimierungsverfahren mit Austesten in einem Parameterraum der Aufnahmeparameter und/oder Decodierparameter festgelegt wird.

11. Verfahren nach Anspruch 10,
wobei das Beispielbild erneut bei einer Einstellung gemäß einem zu testenden mindestens einen Aufnahmeparameter aufgenommen wird.

12. Verfahren nach Anspruch 10 oder 11,
wobei mehrere Beispielbilder bei einer zu testenden Fokuslage und mehreren Lichtempfindlichkeiten aufgenommen werden.

13. Verfahren nach einem der vorhergehenden Ansprüche,
wobei das Einrichten mit nur einem einzigen Beispielobjekt erfolgt.

14. Kamerabasierte Codelesevorrichtung (10, 38) mit einem Bildsensor (18) zur Aufnahme von Bilddaten und mit einer Steuer- und Auswertungseinheit (24, 38), die gemäß einem Verfahren nach einem der vorhergehenden Ansprüche eingerichtet ist und die dafür ausgebildet ist, im Betrieb Bilder von Objekten (30) zu erfassen und darauf angebrachte optische Codes (34) zu lesen.

15. Codelesevorrichtung (10, 38) nach Anspruch 14,
die stationär an einem Strom zu erfassender Objekte (30) montiert ist, insbesondere an einer Fördereinrichtung (28) und/oder die eine dem Bildsensor (18) zugeordnete Optik (16) aufweist, deren Fokuslage nur manuell oder langsamer verstellbar ist als eine erwartete Objektabfolge.

## Claims

1. A method for automatically setting up a code reading device (10, 38) comprising an image sensor (18) and a control and evaluation unit (24, 38), wherein an example image of an example object with an example code arranged in the field of view (14) of the image sensor (18) is recorded using the image sensor (18), and at least one recording parameter and/or at least one decoding parameter for the operation of the code reading device (10, 38) is set on the basis of an evaluation of the example image,
**characterized in that** further example images are generated from the example image by computational modification and the at least one recording parameter and/or the at least one decoding parameter is set on the basis of an evaluation of the further example images.

2. The method according to claim 1,
wherein the evaluation of an example image comprises a decoding attempt.

3. The method according to claim 1 or 2,
wherein the at least one recording parameter comprises a light sensitivity, an exposure time, a frame rate and/or a focus position of optics (16) arranged upstream of the image sensor.

4. The method according to any of the preceding claims,
wherein further example images are generated for different object sizes, in particular a further example image each for a minimum object height and maximum object height expected in the subsequent operation.

5. The method according to claim 4,
wherein the further example images are generated by resolution increase or resolution reduction, in particular by means of bicubic interpolation.

6. The method according to claim 4 or 5,
wherein the further example images are generated with a blur corresponding to an expected misfocus.

7. The method according to any of the preceding claims,
wherein further example images are generated by shifting image contents.

8. The method according to claim 7,
wherein the further example images are generated with an expected motion blur.

9. The method according to any of the preceding claims,
wherein firstly an initial value for the at least one recording parameter and/or decoding parameter is determined so that the sample code can be read.

10. The method according to any of the preceding claims,
wherein the at least one recording parameter and/or decoding parameter is set by an optimization method with testing in a parameter space of the recording parameters and/or decoding parameters.

11. The method of claim 10,
wherein the sample image is retaken at a setting according to at least one recording parameter to be tested.

12. The method according to claim 10 or 11,
wherein a plurality of example images are taken at a focus position to be tested and at a plurality of light sensitivities.

13. The method according to any of the preceding claims,
wherein the setup is performed with only a single example object.

14. A Camera-based code reading device (10, 38) comprising an image sensor (18) for recording image data and a control and evaluation unit (24, 38) that is set up in accordance with a method according to any of the preceding claims and that is configured to capture images of objects (30) and to read optical codes (34) arranged thereon during operation.

15. The code reading device (10, 38) according to claim 14,
that is stationarily mounted at a stream of objects (30) to be detected, in particular at a conveyor (28), and/or that comprises optics (16) associated with the image sensor (18) whose focus position can only be adjusted manually or more slowly than an expected object sequence.

## Revendications

1. Procédé pour l'installation automatique d'un dispositif de lecture de codes (10, 38) comprenant un capteur d'images (18) et une unité de commande et d'évaluation (24, 38), dans lequel une image d'exemple d'un objet d'exemple disposé dans le champ de vision (14) du capteur d'images est enregistrée avec un code d'exemple à l'aide du capteur d'images (18), et au moins un paramètre d'enregistrement et/ou au moins un paramètre de décodage pour le fonctionnement du dispositif de lecture de codes (10, 38) est déterminé à l'aide d'une évaluation de l'image d'exemple,
**caractérisée en ce que** d'autres images d'exemple sont générées à partir de l'image d'exemple par modification par calculateur et que ledit au moins un paramètre d'enregistrement et/ou ledit au moins un paramètre de décodage est déterminé à l'aide d'une évaluation des autres images d'exemple.

2. Procédé selon la revendication 1,
dans lequel l'évaluation d'une image d'exemple comprend un essai de décodage.

3. Procédé selon la revendication 1 ou 2,
dans lequel ledit au moins un paramètre d'enregistrement comprend une sensibilité à la lumière, un temps d'exposition, une fréquence de répétition d'images et/ou une position focale d'une optique (16) disposée en amont du capteur d'images.

4. Procédé selon l'une des revendications précédentes,
dans lequel d'autres images d'exemple sont générées pour différentes tailles d'objets, en particulier une image d'exemple supplémentaire pour une hauteur d'objet minimale et une hauteur d'objet maximale attendues dans le fonctionnement suivant.

5. Procédé selon la revendication 4,
dans lequel les autres images d'exemple sont générées par augmentation ou réduction de la résolution, en particulier au moyen d'une interpolation bicubique.

6. Procédé selon la revendication 4 ou 5,
dans lequel les autres images d'exemple sont générées avec un flou correspondant à une erreur de focalisation attendue.

7. Procédé selon l'une des revendications précédentes,
dans lequel d'autres images d'exemple sont générées en déplaçant le contenu de l'image.

8. Procédé selon la revendication 7,
dans lequel les autres images d'exemple sont générées avec un flou de mouvement attendu.

9. Procédé selon l'une des revendications précédentes,
dans lequel d'abord une valeur initiale pour ledit au moins un paramètre d'enregistrement et/ou un paramètre de décodage est déterminée afin que le code d'exemple puisse être lu.

10. Procédé selon l'une des revendications précédentes,
dans lequel ledit au moins un paramètre d'enregistrement et/ou un paramètre de décodage est défini par un procédé d'optimisation avec des tests dans un espace de paramètres des paramètres d'enregistrement et/ou des paramètres de décodage.

11. Procédé selon la revendication 10,
dans lequel l'image d'exemple est à nouveau prise à un réglage selon d'au moins un paramètre d'enregistrement à tester.

12. Procédé selon la revendication 10 ou 11,
dans lequel plusieurs images d'exemple sont prises à une position focale à tester et à plusieurs sensibilités à la lumière.

13. Procédé selon l'une des revendications précédentes,
dans lequel la configuration est effectuée avec un seul objet d'exemple.

14. Dispositif de lecture de codes basé sur une caméra (10, 38) avec un capteur d'images (18) pour l'enregistrement de données d'images et avec une unité de commande et d'évaluation (24, 38) qui est installée selon un procédé selon l'une des revendications précédentes et qui est configurée pour capturer des images d'objets (30) et pour lire des codes optiques (34) disposés sur ces objets pendant le fonctionnement.

15. Dispositif de lecture de codes (10, 38) selon la revendication 14,
qui est monté de manière stationnaire sur un flux d'objets (30) à détecter, en particulier sur un convoyeur (28), et/ou qui comprend une optique (16) associée au capteur d'images (18) dont la position focale ne peut être réglée que manuellement ou plus lentement qu'une séquence d'objets attendue.
